(19) Europäisches Patentamt
European Patent Office
Office européen des brevets

(11) Veröffentlichungsnummer: **0 249 160 B1**

# (12) EUROPÄISCHE PATENTSCHRIFT

(45) Veröffentlichungstag der Patentschrift: **27.11.91**

(51) Int. Cl.⁵: **G05B 19/405**

(21) Anmeldenummer: **87108151.9**

(22) Anmeldetag: **05.06.87**

---

(54) **Industrienähmaschine.**

---

(30) Priorität: **06.06.86 DE 3619128**

(43) Veröffentlichungstag der Anmeldung:
**16.12.87 Patentblatt 87/51**

(45) Bekanntmachung des Hinweises auf die
Patenterteilung:
**27.11.91 Patentblatt 91/48**

(84) Benannte Vertragsstaaten:
**AT BE CH DE ES FR GB GR IT LI NL SE**

(56) Entgegenhaltungen:
**DE-A- 3 102 445**
**GB-A- 1 054 905**
**GB-A- 2 088 093**

(73) Patentinhaber: **Frankl & Kirchner GmbH. & Co. KG Fabrik für Elektromotoren und elektrische Apparate**
**Scheffelstrasse 73**
**W-6830 Schwetzingen(DE)**

(72) Erfinder: **Olbrich, Bernd, Dipl.-Ing.**
**Segener Strasse 2,**
**W-6834 Ketsch(DE)**

(74) Vertreter: **Schneck, Herbert, Dipl.-Phys., Dr. et al**
**Rau & Schneck Patentanwälte Königstrasse 2**
**W-8500 Nürnberg 1(DE)**

**Beschreibung**

Die Erfindung betrifft eine Industrienähmaschine umfassend eine über einen elektromotorischen Antrieb antreibbare Hauptwelle, einen an der Hauptwelle angeordneten Positionsgeber und eine in Abhängigkeit von dem Positionsgeber den elektromotorischen Antrieb ansteuernde Regel- und Steueranordnung und eine Bedien- und Anzeigeanordnung sowie eine Mehrzahl von diesen und weiteren Komponenten zugeordneten Schnittstellen.

Eine derartige Industrienähmaschine bzw. ein elektronischer Positionierantrieb der genannten Art ist aus der DE-A-29 38 040 bekannt.

Bei dieser bekannten Ausführungsform werden die externen Bedienungselemente über parallele Anschlußverbindungen, die von der Antriebssteuerung abgefragt werden, angeschlossen. Eine derartige Verbindung zwischen einer Bedien- und Anzeigeanordnung und der Regel- und Steueranordnung kann nicht unter allen Einsatzbedingungen gewährleisten, daß die Kommunikation zwischen den beiden Komponenten und eventuell weiteren denkbaren externen Komponenten mit der erforderlichen Zuverlässigkeit erfolgt, da die elektronischen Bauteile in der Nähe von Nähmaschinen z.B. durch Schalten von Schützen oder Magneten und die dabei auftretenden elektromagnetischen Felder gestört werden können.

Die GB-A-1 054 905 betrifft das Problem, ein Steuersystem zum asynchronen Steuern des Parallelbetriebes mehrerer Stickmaschinen gemäß Stick-Steuerdaten, die gesondert für eine jeweilige Maschine aus einem Satz von Speichern ausgelesen werden. Dabei soll für die jeweiligen Maschinen eine Vielfalt von Stickmusterdaten auslesbar sein, und es soll eine große Anzahl wählbarer Stick-Steuerdaten gespeichert sein. Zu diesem Zweck ist eine Haupt-Steuereinheit zum Auslesen von Daten aus den Speichern und eine Mehrzahl von elektronischen Zweit-Steuereinheiten vorgesehen. Zur Verbindung der zentralen Steuereinheit mit den Zweit-Steuereinheiten weist der Ausgang einer Komponente eine Treiberstufe mit einer Einrichtung zum Invertieren des zu übertragenden Signals auf, wobei über die zweidrahtige Verbindungsleitung zu der anderen Komponente ein invertiertes und ein nicht invertiertes Signal übertragen werden, und wobei der Eingang der anderen Komponente eine Differenzbildungseinrichtung zur Bildung der Differenz der beiden ankommenden Signale aufweist.

Im Gegensatz zu Industrie-Nähmaschinen stellt sich bei diesen Stickmaschinen aber nicht das Problem, daß jede einzelne Maschine je nach den spezifischen Wünschen der Abnehmer bei der Auslieferung mit ganz unterschiedlichen Komponenten ausgestattet ist, so daß nicht eine störsichere Ansteuerung unabhängig davon vorgegeben ist, mit welchem Komponenten eine bestimmte Industrie-Nähmaschine entsprechend den Wünschen und Bedürfnissen eines bestimmten Kunden ausgestattet wird.

Die GB-A-2 088 093 beschreibt ein automatisches Positionskontrollsystem für eine Vorrichtung, mit Hilfe derer beispielsweise Papier in Streifen bzw. Bahnen geschnitten werden kann. Aus dieser dementsprechend an sich gattungsfremden Druckschrift ist es bekannt, jeder einzelnen Komponente aus einer Mehrzahl von Komponenten eine Senderbzw. Empfängereinrichtung vor- bzw. nachzuschalten, wobei die einzelnen Komponenten über einen gemeinsamen Datenbus miteinander verbunden sind, und wobei die Sender- bzw. Empfängereinrichtungen individuell kodiert sind, so daß sie über eine dem Mikroprozessor der jeweiligen Komponente nach- bzw. vorgeschaltete Sender- bzw. Empfängeranordnung über eine vom Mikroprozessor erzeugte Kodierung einzeln ansteuerbar sind bzw. deren Rückmeldung individuell erkennbar ist.

Hiervon ausgehend liegt der Erfindung die Aufgabe zugrunde, die einzelnen Komponenten einer Industrie Nähmaschine so miteinander zu verbinden, daß bei geringem Leitungsaufwand und großer Flexibilität hinsichtlich der zur Verfügung stehenden Anschlüsse eine hohe Störsicherheit erreicht wird.

Diese Aufgabe wird erfindungsgemäß dadurch gelöst, daß von und zu jeder Schnittstelle für die Hin- und Rückübertragung von Signalen zwischen n angeschlossenen Komponenten je zwei Leitungen vorgesehen sind, daß der Ausgang jeder der n-Komponenten jeweils eine Treiberstufe mit einer Einrichtung zur Invertierung des zu übertragenden Signals aufweist, wobei dem Eingang bzw. dem Ausgang jeder einzelnen der n-Komponenten eine Sender- bzw. Empfängereinrichtung vorgeschaltet bzw. nachgeschaltet ist, wobei die einzelnen Komponenten über einen gemeinsamen Datenbus miteinander verbunden sind, und wobei die Sender bzw. Empfängereinrichtungen individuell kodiert sind, so daß sie über eine jeweils einem Mikroprozessor nach- bzw. vorgeschaltete Sender- bzw. Empfängereinrichtung über eine vom Mikroprozessor der Regel- und Steueranordnung erzeugte Kodierung einzeln ansteuerbar sind bzw. deren Rückmeldung individuell erkennbar ist, wobei so ein zu übertragendes Signal symmetrisch aufgeteilt wird in ein normales und ein invertiertes Signal, beide Signale über die getrennten Leitungen übertragen und auf der Empfangsseite so verknüpft werden, daß der Betrag der Differenz der beiden Signale eine vorgegebene Schwelle überschreiten muß, um ein Ausgangssignal zu erzeugen.

Durch eine derartige Schnittstellenanordnung, welche z.B. der an sich bekannten Spezifikation RS 422 entsprechen kann, wird erreicht, daß ohne zusätzliche Filter, wie z.B. RC-Netzwerke, eine sehr hohe Störsicherheit erreicht wird. Aufgrund der durch die erfindungsgemäße Ausgestaltung vorgesehenen seriellen Informationsübertragung wird der Leitungsaufwand reduziert und können mehrere Einzelgeräte, wie z.B. Bedienteil, Steuerungen, Testgeräte, Speichermedien usw., an einen einzigen Informationsstrang angeschlossen werden, wodurch das Gesamtsystem an Weiterentwicklungen und individuelle Gestaltungswünsche anpaßbar ist. Weiterhin wird ein effizienter Datendurchsatz erreicht, da nicht angesprochene Komponenten sich selbsttätig vom Informationsstrang abtrennen und derart vom übrigen System abgetrennt zeitparallel eigene Funktionen ausführen können. Letztlich ist es noch möglich, die Störsicherheit weiterhin dadurch zu erhöhen, daß Funktionsvorschriften auf mehrere Systemkomponenten verteilt bzw. mehrfach gespeichert werden.

Die erfindungsgemäße Industrienähmaschine stellt mit der verwendeten Übertragungstechnik damit eine grundsätzliche Abkehr von bekannten Versuchen dar, die Störsicherheit von derartigen Maschinen bzw. der zugehörigen Steuer- und Antriebseinrichtungen zu erhöhen, da man herkömmlicherweise stets versucht hat, die einzelnen Komponenten selbst möglichst störsicher zu gestalten und dementsprechend eine fertige Nähmaschine bzw. einen Antrieb hierfür mit klassischen Methoden der Störanfälligkeitsprüfung zu untersuchen bzw. durch individuelle Gegenmaßnahmen störsicher zu machen.

Dieses herkömmliche Vorgehen trägt aber zum einen nicht dem Umstand Rechnung, daß die elektronischen Komponenten von Industrie-Nähmaschinen immer aufwendiger und damit schwerer auf denkbare Störeinflüsse zu untersuchen sind, und daß andererseits Industrie-Nähmaschinen häufig von den Abnehmern entsprechend deren individuellen Bedürfnissen umgebaut bzw. mit Zusatzaggregaten versehen werden, welche bei der herstellerseitigen Entstörkonzeption nicht berücksichtigt werden können.

Nachfolgend wird die Erfindung anhand einer bevorzugten Ausführungsform in Verbindung mit der Zeichnung näher beschrieben. Dabei zeigen:

Fig. 1    eine blockschaltbildartige, schematische Darstellung einer erfindungsgemäßen Industrie-Nähmaschine mit einer externen Regel- und Steueranordnung und einer externen Bedien- und Anzeigeanordnung,

Fig. 2    eine schematische Darstellung der Signalübertragungswege zwischen einer Bedien- und Anzeigeanordnung und von dieser anzusteuernden Komponenten,

Fig. 3    eine Darstellung der erzeugten bzw.

übertragenen Signale und

Fig. 4    eine schematische Darstellung der Anordnung verschiedener abhängiger Komponenten an einem gemeinsamen Datenbus.

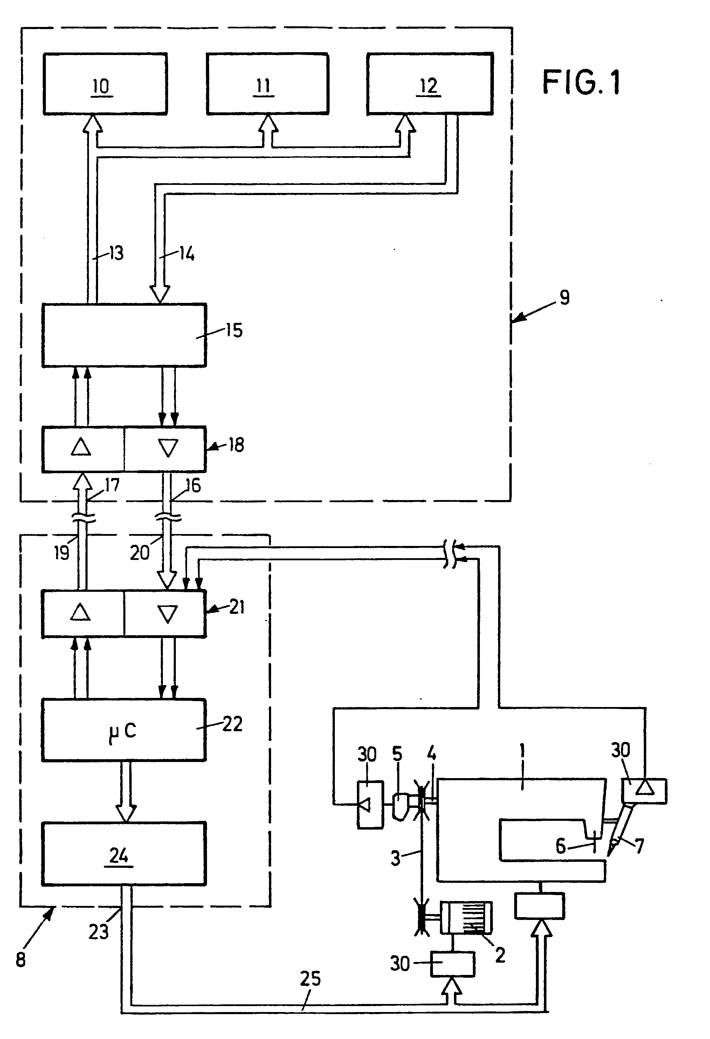

In Fig. 1 ist schematisch eine Industrienähmaschine 1 dargestellt, welche von einem Positionierantrieb 2 über den Riemenantrieb 3 angetrieben wird. An der schematisch dargestellten Hauptwelle 4 der Nähmaschine 1 ist ein Positionsgeber 5 angeordnet. Im Nähbereich vor der Nadel 6 ist ein Sensor in Form einer Lichtschranke 7 vorgesehen.

Dem Positionierantrieb 2 bzw. der Nähmaschine 1 ist eine Regel- und Steueranordnung 8 zugeordnet. Die Bedienung bzw. Kontrolle erfolgt über eine Bedien- und Anzeigeanordnung 9.

Die Bedien- und Anzeigeanordnung 9 umfaßt ein Display 1o, ein Leuchtdiodenfeld 11 und eine Eingabetastatur 12. Diese sind über Datenleitungen 13, 14 mit einem Mikroprozessor 15 verbunden, wobei zwischen Mikroprozessor 15 und dem Aus- bzw. Eingang 16 bzw. 17 eine Sender- bzw. Empfängeranordnung 18 angeordnet.

Dem Ausgang 19 bzw. dem Eingang 2o der Regel-und Steueranordnung 8 ist ebenfalls eine Sende-Empfangs-Anordnung 21 und ein Mikroprozessor 22 nachgeordnet. Zwischen dem Mikroprozessor 22 und dem Ausgang 23 sind Leistungsendstufen 24 angeordnet, über welche mittels der Leitung 25 die Nähmaschine 1 bzw. der Positionierantrieb 2 angesteuert werden.

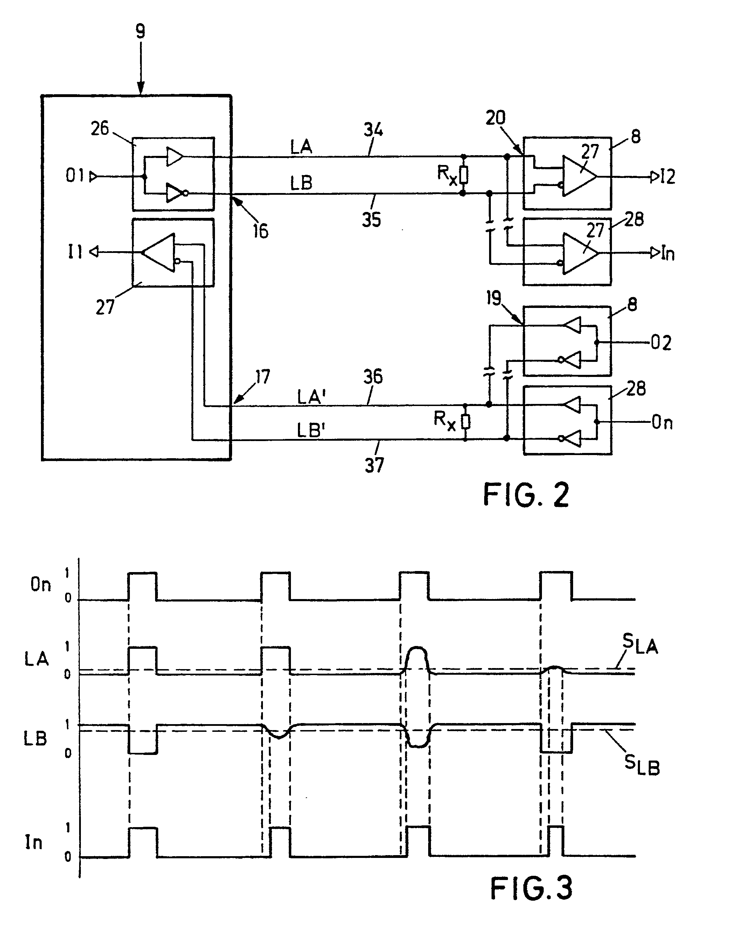

Fig. 2 zeigt schematisch und unter Weglassung der für die folgende Beschreibung nicht wesentlichen Komponenten den Bereich vor dem Ausgang 16 bzw. dem Eingang 17 der Bedien- und Anzeigeanordnung 9. Dem Ausgang 16 ist eine Treiberstufe mit einer Einrichtung zur Invertierung des zu übertragenden Signals 01 vorgeordnet. Dem Eingang 17 ist eine Differenzbildungseinrichtung 27 zur Bildung der Differenz der ankommenden Signale LA' bzw. LB' unter Erzeugung des Eingangssignals l1 nachgeordnet.

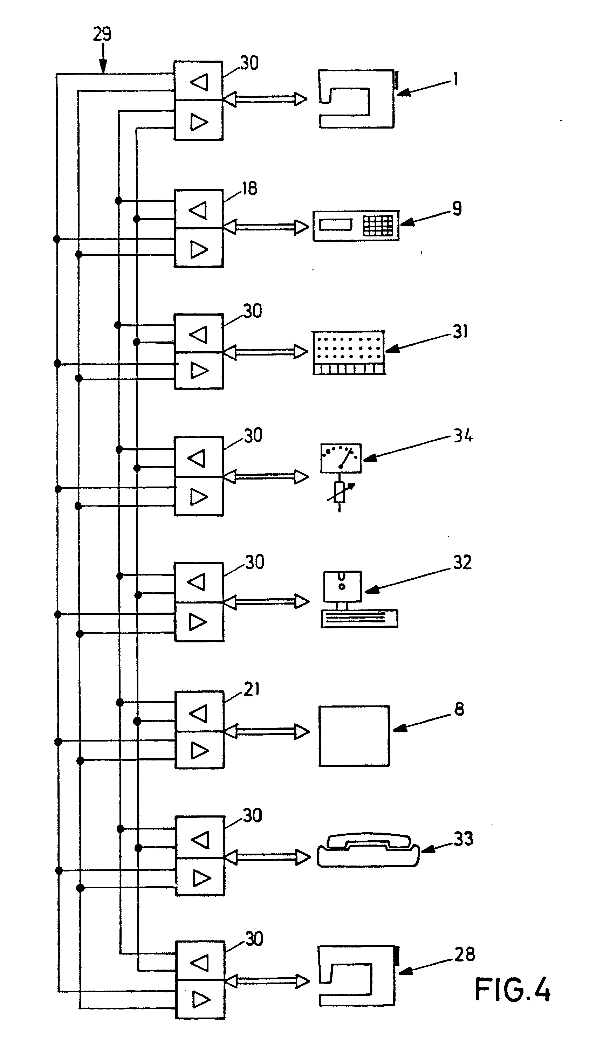

Mit dem Ausgang 16 ist der Eingang 20 der Regel- und Steueranordnung 8 und mit dem Ausgang 19 der Regel-und Steueranordnung 8 ist der Eingang 17 der Bedien-und Anzeigeanordnung verbunden. Parallel zu dem Eingang 2o bzw. dem Ausgang 19 der Regel- und Steueranordnung können weitere Komponenten geschaltet sein, wie z.B. als n-te Komponente eine weitere, abhängig arbeitende Nähmaschine 28 (vgl. Fig. 4).

Zwischen den die Signale LA bzw. LB und die Signale LA' bzw. LB' übertragenden Leitungen 34, 35 bzw. 36, 37 ist jeweils ein Widerstand $R_x$ angeordnet. Dieser Widerstand $R_x$ dient zur Einstellung eines für die Bildung des Ausgangssignals l maßgeblichen Schwellwertes $S_{LA}$ bzw. $S_{LB}$.

Die Signalbildung und -übertragung ist in Fig. 3 veranschaulicht.

Ein Ausgangssignal 0n der n-ten Komponente, z.B. das Ausgangssignal 01 der Bedien- und Anzeigeanordnung 9, wird durch die Treiberstufe 26 in ein invertiertes und nichtinvertiertes Signal LB bzw. LA aufgespalten und übertragen. Nach erfolgter Übertragung ergibt sich die in Fig. 3 dargestellte Signalform LA bzw. LB. Aus diesen übertragenen Signalen LA bzw. LB bildet eine Differenzbildungseinrichtung 27 ein Ausgangssignal $I_n$ für die n-te Komponente, z.B. das Ausgangssignal I2 für die Regel- und Steueranordnung 8. Entsprechend der Höhe des über den Widerstand $R_x$ eingestellten Schwellwertes $S_{LA}$ bzw. $S_{LB}$ werden Störanteile abgeschnitten. Durch diese Übertragungstechnik ist eine sichere Trennung von Signal und Störrauschen und damit eine sehr zuverlässige Signalübertragung möglich.

In Fig. 4 ist veranschaulicht, wie die einzelnen Komponenten über einen gemeinsamen Datenbus 29 miteinander verbunden werden können, wobei jeder Komponente eine Sende-Empfangsanordnung 3o zugeordnet ist, welche jeweils den näher beschriebenen Sende-Empfangsanordnungen 18, 21 entspricht. Als derartige Komponenten kommen neben der erwähnten Nähmaschine 1, der Bedien- und Anzeigeanordnung 9, der Lichtschranke 7, der Steuer- und Regelanordnung 8 und einer weiteren, abhängig arbeitenden Nähmaschine 28 Testeräte 31, Speichermedien 32, Modems 33, der Positionsgeber 5 usw. sowie Sensoren 34, z.B. für Druck, Temperatur, Feld in Betracht.

Über den Datenbus 29 wird jeweils ein kodiertes Signal gegeben, so daß jeweils nur diejenige Empfangseinrichtung der adressierten Komponente aktiviert wird, welche entsprechend kodiert ist. Die Kodierung bzw. Dekodierung kann mittels der vorgesehenen Mikroprozessoren 15, 22 bzw. weiterer entsprechender Mikroprozessoren oder über als solche an sich bekannte logische Schaltungen erfolgen.

## Patentansprüche

1. Industrienähmaschine (1) umfassend eine über einen elektromotorischen Antrieb (2) antreibbare Hauptwelle (4), einen an der Hauptwelle (4) angeordneten Positionsgeber (5) und eine in Abhängigkeit von dem Positionsgeber (5) den elektromotorischen Antrieb (2) ansteuernde Regel- und Steueranordnung (8) und eine Bedien- und Anzeigeanordnung (9) sowie eine Mehrzahl von diesen und weiteren Komponenten zugeordneten Schnittstellen, dadurch gekennzeichnet, daß von und zu jeder Schnittstelle für die Hin- und Rückübertragung von Signalen zwischen n angeschlossenen Komponenten je zwei Leitungen (34, 35 bzw. 36, 37) vorgesehen sind, daß der Ausgang (16, 19) jeder der n-Komponenten jeweils eine Treiberstufe (26) mit einer Einrichtung zur Invertierung des zu übertragenden Signals aufweist, wobei dem Eingang (17, 20) bzw. dem Ausgang (16, 19) jeder einzelnen der n-Komponenten eine Sender- bzw. Empfängereinrichtung (18, 21, 30) vorgeschaltet bzw. nachgeschaltet ist, wobei die einzelnen Komponenten über einen gemeinsamen Datenbus (29) miteinander verbunden sind, und wobei die Sender- bzw. Empfängereinrichtungen (18, 21, 30) individuell kodiert sind, so daß sie über eine jeweils einem Mikroprozessor (15 bzw. 22) nach- bzw. vorgeschaltete Sender- bzw. Empfängereinrichtung (18,21,30) über eine vom Mikroprozessor (22) der Regel- und Steueranordnung (8) erzeugte Kodierung einzeln ansteuerbar sind bzw. deren Rückmeldung individuell erkennbar ist, wobei so ein zu übertragendes Signal symmetrisch aufgeteilt wird in ein normales und ein invertiertes Signal, beide Signale über die getrennten Leitungen (34,35 bzw. 36,37) übertragen und auf der Empfangsseite so verknüpft werden, daß der Betrag der Differenz der beiden Signale eine vorgegebene Schwelle überschreiten muß, um ein Ausgangssignal zu erzeugen.

## Claims

1. Industrial sewing machine (1) comprising a main shaft (4) which can be driven by an electric motor drive (2), a position encoder (5) disposed on the main shaft (4), and a regulating and control system (8) controlling the electric motor drive (2) in accordance with the position encoder (5), and an operating and display system (9), as well as a plurality of interfaces associated with these and with further components, characterized in that from and to each interface, for the transmission back and forth of signals between n connected components, two lines (34, 35 and 36, 37, resp.) are in each case provided, in that the output (16, 19) of each of the n components has a driver stage (26) with a system for inverting the signal to be transmitted, the input (17, 20) and the output (16, 19), resp., of each of the n components being preceded and followed, resp., by a receiving and transmitting system (18, 21, 30), resp., the individual components being connected with each other via a common data bus (20), and the receiving and transmitting systems (18, 21, 30) being individually coded, so that they can be triggered individually by a receiving and transmitting system (18, 21, 30) connected in each case upstream and downstream, resp., of a microprocessor (22) via a coding produced by the microprocessor (22) of the regulating and control system (8) and that their feedback is individually detectable, a signal to be transmitted thus being divided symmetrically into a normal signal and an inverted signal, the two signals being transmitted via separate wires (34, 35 and 36, 37, resp.) and combined at the receiving end such that the difference between the two signals has to exceed a given threshold in order to produce an output signal.

signal de sortie.

## Revendications

1. Machine à coudre industrielle (1) comprenant un arbre principal (4) susceptible d'être entrainé par un dispositif d'entrainement (2) à moteur électrique, un capteur de position (5) disposé sur l'arbre principal (4), un ensemble de régulation et de commande (8) pilotant le dispositif d'entrainement (2) à moteur électrique en fonction du capteur de position (5), et un ensemble de commandes de service et d'affichage (9), ainsi que plusieurs interfaces affectées à celles-ci et à d'autres composantes, caractérisée en ce qu'à partir de et vers chaque interface sont prévues respectivement, pour la transmission et le retour de signaux entre n composantes raccordées, deux lignes (34, 35 et 36, 37), en ce que la sortie (16, 19) de chacune des n composantes comporte un étage d'amplification (26) avec un dispositif pour invertir le signal à transmettre, l'entrée (17, 20) et la sortie (16, 19) de chacune des n composantes étant respectivement suivie et précédée d'un dispositif d'émission et de réception (18, 21, 30), les composantes individuelles étant reliées entre-elles par un bus de données commun (29) et les dispositifs d'émission et de réception (18, 21, 30) étant codés individuellement de sorte qu'il est possible, par l'intermédiaire d'un dispositif d'émission et de réception (18, 21, 30) situé respectivement après et avant un microprocesseur (15 et 22) de la composante considérée, de les commander individuellement ou d'identifier individuellement leur retour grâce à un codage engendré par le microprocesseur (22) de l'ensemble de régulation et de commande (8), un signal devant être transmis de la sorte étant divisé symétriquement en un signal normal et en un signal inverti, les deux signaux étant transmis par les lignes séparées (34, 35 et 36, 37) et combinés sur le côté réception, de manière à ce que la valeur de la différence entre les deux signaux doit dépasser une valeur de seuil prédéfinie pour engendrer un

FIG.1

FIG. 2

FIG.3

FIG.4